# FASCICULE DE BREVET EUROPEEN

(11) **EP 3 729 579 B1**
(45) Date de publication et mention de la délivrance du brevet: **18.06.2025**
(21) Numéro de dépôt: 17835690.3
(22) Date de dépôt: 21.12.2017
(51) Int. Cl.: H02G 3/32, H01B 17/14, B60R 16/02

(54) **ENSEMBLE COMPORTANT UN CÂBLE ET UN SUPPORT POUR CE CÂBLE**
ANORDNUNG MIT EINEM KABEL UND EINER HALTERUNG FÜR DAS KABEL
ASSEMBLY COMPRISING A CABLE AND A SUPPORT FOR SAID CABLE

(43) Date de publication de la demande: 28.10.2020
(73) Titulaire: JEHIER, 49120 Chemille (FR)
(72) Inventeur: DAUDE, Adrien, 49510 Beaupréau en Mauges (FR); RENOU, Adelin, 49120 Chemillé en Anjou (FR); AUGEREAU, Pierre, 49280 Maizieres en Mauges (FR)
(74) Mandataire: Gevers & Orès
(86) Numéro de dépôt international: PCT/FR2017/053794
(87) Numéro de publication internationale: WO 2019/122543

(56) Documents cités:
- EP-A1- 0 583 616
- WO-A1-2015/029957
- WO-A1-93/17469
- GB-A- 2 158 143
- JP-U- S 638 488
- US-A- 3 894 706
- US-A- 5 002 243
- US-A- 5 033 701
- US-A- 5 277 387
- US-A1- 2007 018 057
- US-A1- 2010 243 855
- US-A1- 2011 126 934
- US-A1- 2014 157 557
- US-A1- 2015 233 495

## Description

La présente invention concerne un support pour un câble.

Par câble, on entend un câble électrique, pouvant par exemple être employé en tant qu'alimentation en énergie, ou encore un câble optique comme une fibre optique, qui peut notamment être employé pour transmettre de l'information. Quel que soit le type de câble, celui-ci peut présenter une fonction de capteur ou comprendre, un ou plusieurs capteurs.

Un tel support peut notamment être utilisé pour une application aéronautique.

Il existe de nombreux support de câbles.

En pratique, on rencontre des supports de câble basés sur des colliers de serrage, métalliques ou plastiques, des charnières ou des clips. Ces types de support sont notamment proposés dans US 2010/243855 A1, US 2015/233495 A1, US 5 002 243 A, US 5 033 701 A, WO 93/17469 A1, WO 2015/029957 A1, GB 2 158 143 A, US 3 894 706 A, US 2007/018057 A1, US 2014/157557 A1 ou JP S63 8488 U.

Ces différentes solutions ne donnent pas entière satisfaction.

L'invention vise à proposer une solution améliorée.

L'invention propose à cet effet un ensemble comportant un support de câble et un câble inséré dans ledit support, ce dernier comprenant :
- au moins une embase, réalisée en un matériau rigide, comportant au moins un réceptacle muni d'un axe longitudinal et, dont la dimension interne Dᵢₙₜ, prise dans un plan perpendiculaire audit axe longitudinal, est donnée,
- au moins une lanière, réalisée en un matériau plus souple que celui de l'embase, comportant au moins deux lèvres d'une part agencées en vis-à-vis pour définir une fente de passage pour un câble entre lesdites lèvres et d'autre part conformées pour définir un orifice dans lequel ledit câble est inséré, cet orifice, muni d'un axe longitudinal, communiquant avec ladite fente le long de cet axe longitudinal de l'orifice, lesdites lèvres présentant, ensemble, une dimension externe D'ₑₓₜ, prise dans un plan perpendiculaire à l'axe longitudinal de l'orifice, égale ou plus grande que la dimension interne du réceptacle.

L'attache selon l'invention peut comprendre une ou plusieurs des caractéristiques suivantes, prises seules ou en combinaison :
- au moins l'une au moins des lèvres est muni d'un chanfrein entre une surface externe de ladite lèvre et la fente ;
- chaque lèvre comprend une rainure externe s'étendant selon l'axe longitudinal de l'orifice et le réceptacle comprend deux excroissances s'étendant selon l'axe longitudinal du réceptacle, l'agencement et les dimensions desdites excroissances correspondant à l'agencement et aux dimensions des rainures de sorte que, lorsque les lèvres sont insérées dans le réceptacle, les excroissances du réceptacle puissent s'insérer dans les rainures desdites lèvres ;
- ladite au moins une lanière est amovible ;
   ladite au moins une embase comprend, de part et d'autre du réceptacle, un crochet et ladite au moins une lanière comprend, de part et d'autre des lèvres, une ouverture dont une bordure est apte à coopérer avec un crochet correspondant du réceptacle ;
- l'une au moins desdites bordures apte à coopérer avec le crochet correspondant du réceptacle comporte un moyen de rigidification ;
- ladite au moins une lanière comporte au moins une zone de préhension pour un utilisateur ;
- ladite au moins une embase comprend au moins deux réceptacles et une lanière selon l'invention associée à chaque réceptacle ;
- ladite au moins une embase comprend au moins deux réceptacles et une lanière commune pour les deux réceptacles, ladite lanière commune présentant deux paires de lèvres selon l'invention, chaque paire de lèvres étant destinée à coopérer avec l'un des deux réceptacles ;
- le matériau formant ladite au moins une lanière est un élastomère de dureté Shore A comprise entre 40 et 85 ou un thermoplastique élastomère de dureté Shore A comprise entre 40 et 85 ;
- ledit élastomère de dureté Shore A comprise entre 40 et 85 est choisi parmi : silicone, butadiène acrylonitrile, fluoroélastomère, en particulier fluorosilicone, élastomère polyacrylique, polychloroprène, acrylique, polyéthylène chlorosulfoné, copolymères éthylène-propylène, polyuréthane, élastomère naturel ;
- ledit thermoplastique élastomère de dureté Shore A comprise entre 40 et 85 est un thermoplastique polyuréthane ;
- le matériau formant ladite au moins une embase est un thermoplastique ;
- le matériau thermoplastique de l'embase est choisi parmi : polétheretherkétone, polyimides, polyétherkétonekétone, polyamides, polysulfure de phénylène, polyphénylsulfone, polytétrafluroroéthylène, polyfluorure de vinylidène, éthylène chlorotrifluoroéthylène, polyéthylène, polypropylène ;
- le matériau formant ladite au moins une embase est du polyétherétherkétone et le matériau formant ladite au moins une lanière est une silicone de dureté shore A comprise entre 40 et 85, avantageusement entre 50 et 70 ;
- le matériau formant ladite au moins une embase est du polyamide et le matériau formant ladite au moins une lanière est du polyuréthane, de dureté shore A comprise entre 40 et 85.

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1, qui comprend les figures 1(a) à 1(f), représente sur la figure 1(a) un support de câble selon un premier mode de réalisation de l'invention, sur les figures 1(b) à 1(d), différentes vues d'une lanière faisant partie du support de câble de la figure 1(a) avec notamment, la présence du câble dans le support sur la figure 1(d) et, sur les figures 1(e) et 1(f), différentes vues d'une embase faisant partie du support de câble de la figure 1(a) ;
- la figure 2, qui comprend les figures 2(a) à 2(e), représente sur la figure 2(a), ainsi que sur la figure 2(e), un support de câble selon un deuxième mode de réalisation de l'invention, avec la présence du câble dans le support sur la figure 2(a) ; sur la figure 2(b), une lanière faisant partie du support de câble des figures 2(a) et 2(e) et, sur les figures 2(c) et 2(d), une embase faisant partie du support de câble des figures 2(a) et 2(e) ;
- la figure 3 représente un troisième mode de réalisation d'un support de câble selon l'invention, capable de supporter deux câbles ;
- la figure 4 représente un quatrième mode de réalisation d'un support de câble selon l'invention, également capable de supporter deux câbles ;
- la figure 5 représente différentes étapes d'un procédé de montage d'un câble dans un support selon l'invention, en l'occurrence le support de la figure 1.

L'invention est relative à un ensemble ESB comportant un câble et un support 100, 100', 100", 100‴ de câble C dans lequel le câble C est inséré. Plusieurs modes de réalisation de cet ensemble ESB, correspondant à plusieurs réalisations possibles du support de câble sont présentées ci-dessous.

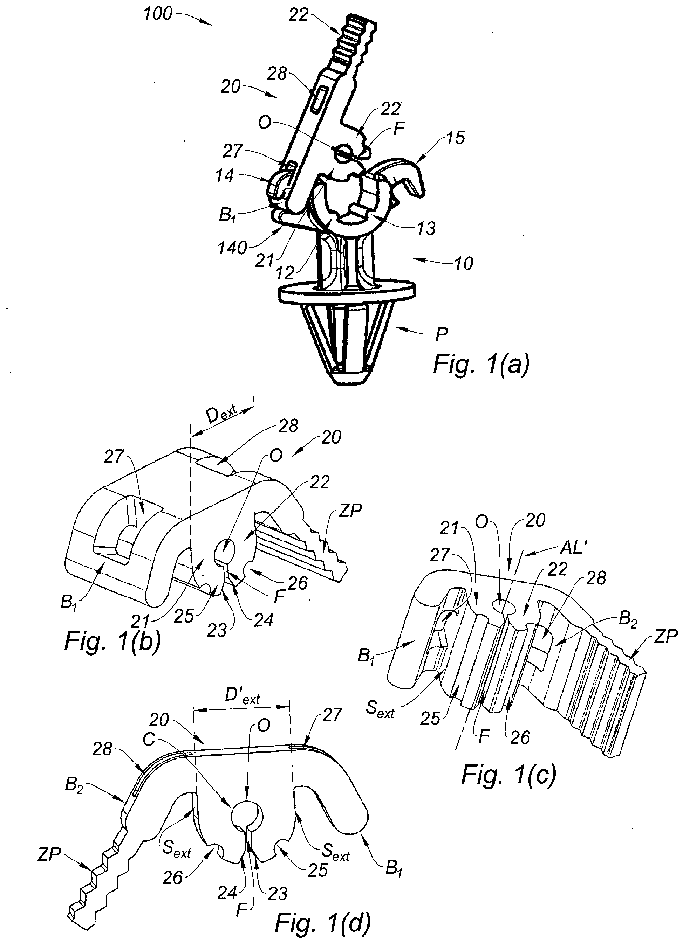

Nous allons tout d'abord décrire la structure d'un premier mode de réalisation d'un support de câble conforme à l'invention à l'appui des figures 1(a) à 1(f).

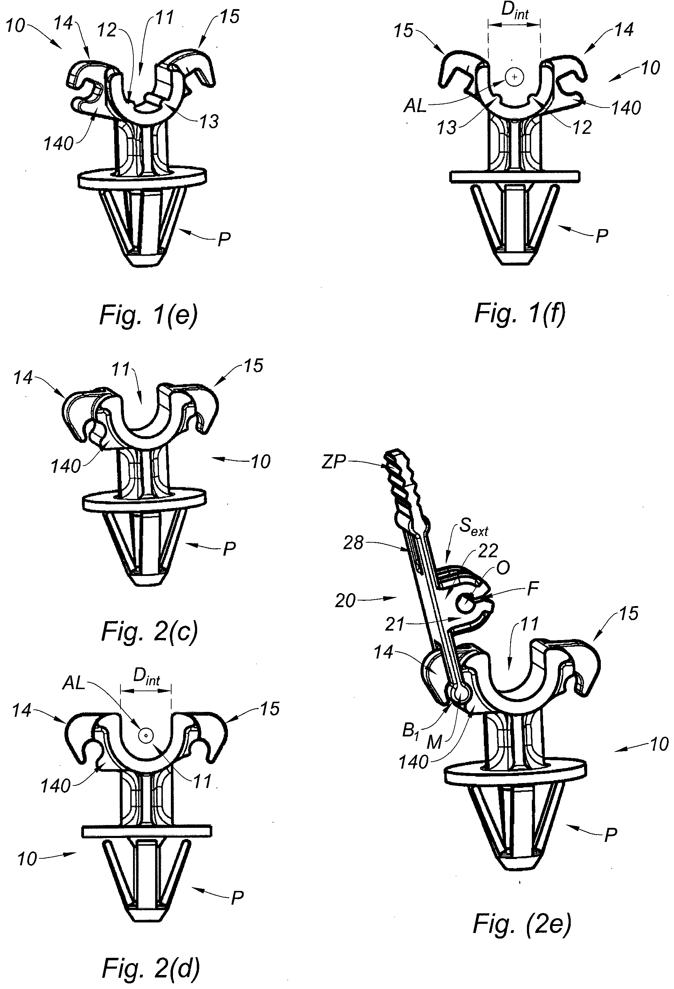

Le support 100 de câble représenté sur la figure 1 comprend au moins une embase 10, réalisée en un matériau rigide, et au moins une lanière 20 réalisée en un matériau plus souple que celui de l'embase.

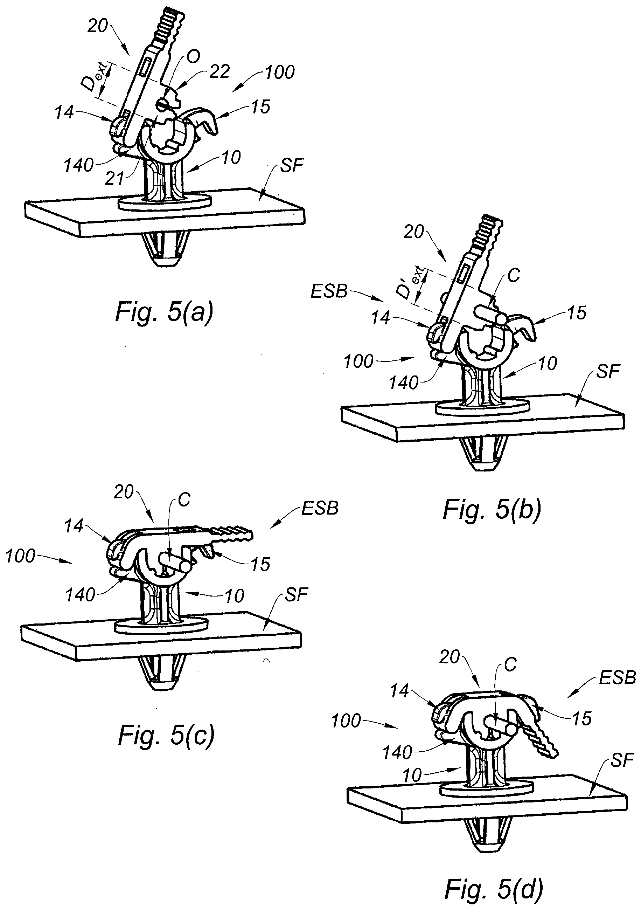

L'embase 10 comporte au moins un réceptacle 11 muni d'un axe longitudinal AL et, dont les dimensions internes Dᵢₙₜ, prises dans un plan perpendiculaire audit axe longitudinal AL, sont données. L'embase 10 peut comporter un pied P, clipsable dans un support fixe (non représenté sur la figure 1, mais visible sur la figure 5) externe au support 100 selon l'invention.

Ladite au moins une lanière 20 comporte au moins deux lèvres 21, 22 agencées en vis-à-vis pour définir une fente F de passage pour un câble entre lesdites lèvres 21, 22. Par ailleurs, ces lèvres sont conformées pour définir un orifice O de support dudit câble. L'orifice O est muni d'un axe longitudinal AL' et communique avec la fente F le long de cet axe longitudinal AL'.

Les lèvres 21, 22 définissent, ensemble, après installation du câble dans l'orifice O, une dimension D'ₑₓₜ prise dans un plan perpendiculaire à l'axe longitudinal AL' de l'orifice O, qui est égale ou avantageusement plus grande que la dimension interne Dᵢₙₜ du réceptacle 11.

D'un point de vue pratique, ceci peut être obtenu en prévoyant des lèvres 21, 22, qui définissent, ensemble, une dimension externe Dₑₓₜ, prise dans un plan perpendiculaire à l'axe longitudinal AL' de l'orifice O avant l'insertion du câble dans l'orifice O, égale ou avantageusement plus grande que la dimension interne Dᵢₙₜ du réceptacle 11. Une fois le câble inséré dans l'orifice O, on définit alors une dimension externe D'ₑₓₜ telle que D'ₑₓₜ ≥ Dₑₓₜ.

D'un point de vue pratique également, ceci peut en variante être obtenu lorsque ladite dimension Dₑₓₜ des lèvres 21, 22 est inférieure à la dimension interne Dᵢₙₜ du réceptacle, mais la dimension D'ₑₓₜ est supérieure ou égale à cette dimension interne Dᵢₙₜ. En effet, le câble C, en fonction de sa géométrie et de sa nature, peut avoir pour effet, lors de son insertion dans l'orifice O et avant l'insertion des lèvres 21, 22 dans le réceptacle 11 de déformer les lèvres pour les faire passer d'une dimension externe Dₑₓₜ à une dimension D'ₑₓₜ.

Ainsi, dans tous les cas, une fois le câble inséré dans l'orifice O, l'insertion des lèvres 21, 22 de la lanière 20 dans le réceptacle 11 implique une déformation des lèvres 21, 22, du fait que leur dimension externe D'ₑₓₜ est égale ou plus grande que la dimension interne Dᵢₙₜ (D_{ext'} ≥ Dᵢₙₜ) du réceptacle.

Les lèvres 21, 22 de la lanière 20 sont ainsi insérées à force dans le réceptacle 11 de l'embase 10.

Par ailleurs, une fois les lèvres 21, 22 insérées dans le réceptacle, l'écartement des lèvres 21, 22 est empêché par le réceptacle 11, ce qui empêche la sortie du câble de l'orifice O.

Cela implique deux conséquences.

La première conséquence est que tout écartement des lèvres 21, 22 est empêché par le réceptacle 11 si bien que le câble se retrouve bloqué dans l'orifice O. On évite ou limite donc, en utilisation, la sortie du câble de cet orifice O.

La deuxième conséquence est que le maintien des lèvres 21, 22 dans le réceptacle 11 est ainsi assuré.

Le maintien des lèvres 21, 22 dans le réceptacle 11 peut être amélioré.

A cet effet, et comme concerné par le mode de réalisation de la figure 1, chaque lèvre 21, 22 comprend une rainure 25, 26 externe s'étendant selon l'axe longitudinal AL' de l'orifice O et le réceptacle 11 comprend deux excroissances 12, 13 s'étendant selon l'axe longitudinal AL du réceptacle 11. L'agencement des excroissances 12, 13 correspond à l'agencement des rainures 25, 26 externes. Par ailleurs, la dimension transversale (i.e. une dimension prise transversalement à l'axe longitudinal AL du réceptacle 11) des excroissances 12, 13 correspond ou est avantageusement supérieure à la dimension transversale (i.e. une dimension prise transversalement à l'axe longitudinal AL' de l'orifice O) des rainures 25, 26 externes correspondantes. Ainsi, la coopération des excroissances 12, 13 et des rainures 25, 26 externes apporte un maintien ou blocage supplémentaire qui participe à éviter le retrait, en utilisation, des lèvres 21, 22 du réceptacle 11 de l'embase 10.

Le maintien des lèvres 21, 22 dans le réceptacle 11 peut encore être amélioré.

A cet effet, il est possible d'attacher la lanière 20 à l'embase 10 avec des moyens complémentaires. Ainsi, et avantageusement, ladite au moins une embase 10 comprend, de part et d'autre du réceptacle 11, un crochet 14, 15 et ladite au moins une lanière 20 comprend, de part et d'autre des lèvres 21, 22, une ouverture 27, 28 comportant une bordure B1, B2 apte à coopérer avec un crochet 14, 15 correspondant du réceptacle 11. Ces moyens complémentaires permettent de tendre la lanière 20, dans une direction sensiblement perpendiculaire à celle définie par l'axe longitudinal AL' de l'orifice O. On comprend que cette mise sous tension est rendue possible du fait que la lanière 20 est plus souple que l'embase 10.

Les moyens complémentaires décrits ci-dessus sont un exemple de mise en œuvre pour une lanière 20 amovible.

Il pourrait en être autrement si la lanière n'était pas amovible.

Il convient cependant de noter que, lorsque la lanière 20 est amovible, l'embase 10 prévoit un contre-crochet 140 permettant, avec le crochet 14, de définir un logement dans lequel la bordure B1 de la lanière 20 est bloquée (sauf en cas d'action mécanique forcée d'un utilisateur). On évite ainsi la perte de la lanière 20.

Par ailleurs, afin de faciliter l'installation de ladite au moins une lanière 20 sur l'embase 10, une zone de préhension ZP pour un utilisateur est prévue sur la lanière 20. Lorsque la lanière 20 prévoit des moyens complémentaires tels que décrits ci-dessus, la zone de préhension est avantageusement située à une extrémité de la lanière 20.

En outre, au moins l'une des lèvres 21, 22, et avantageusement comme représenté sur la figure 1, chaque lèvre 21, 22, est munie d'un chanfrein 23, 24 entre une surface externe Sₑₓₜ de ladite lèvre 21, 22 et la fente F. Le ou chaque chanfrein 23, 24 permet de faciliter l'insertion du câble dans l'orifice O.

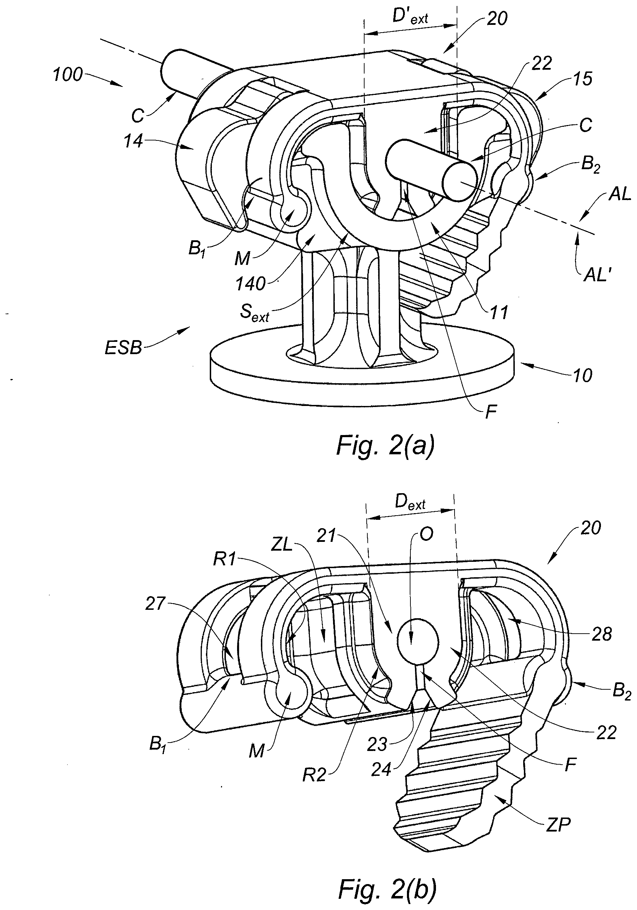

Nous allons maintenant décrire un deuxième mode de réalisation d'un support 100' de câble conforme à l'invention à l'appui des figures 2(a) à 2(c).

Le support 100' selon le deuxième mode de réalisation se distingue du support 100 selon le premier mode de réalisation par l'absence de rainures sur la surface externe Sₑₓₜ des lèvres 21, 22.

En revanche, et contrairement au premier mode de réalisation, les lèvres 21, 22 présentent chacune une épaisseur variable selon la direction définie par l'axe longitudinal AL' de l'orifice O. Ainsi, sur la figure 2(b), on peut observer, en suivant la directions définie par cet axe longitudinal AL', la présence de deux excroissances R1, R2 séparées par une zone creuse ZC. Il en est de même sur l'autre lèvre 22. Le contact entre les lèvres 21, 22 et le réceptacle 11 s'effectue donc par l'intermédiaire de ces excroissances R1, R2. Cette géométrie permet de définir des zones d'amortissement, à savoir les excroissances R1, R2, entre les lèvres 21, 22 et le réceptacle. Cet amortissement présente un intérêt dans des environnements où le support et en conséquence le câble est soumis à des vibrations. En effet, si le caractère souple de la lanière permet de protéger la lanière des vibrations, l'effet d'amortissement procuré par les excroissances R1, R2 séparées par une zone creuse ZC permet d'améliorer cette protection.

Par ailleurs, la lanière 20 étant plus souple que l'embase 10, qui quant à elle est rigide, il peut être avantageux de prévoir que l'une au moins des bordures B1, B2 de la lanière 20 qui est apte à coopérer avec le crochet 14, 15 correspondant du réceptacle 11 comporte un moyen M de rigidification.

Cette possibilité est représentée sur la figure 2, mais pourrait tout autant être mise en œuvre avec le premier mode de réalisation.

On comprend que cette rigidification n'est que localisée, en l'occurrence au niveau de la bordure B1, B2 concernée. Ce moyen M de rigidification peut s'obtenir en jouant sur la géométrie de la bordure (épaisseur plus importante que le reste de la lanière, notamment), comme cela est d'ailleurs le cas sur la figure 2. En variante, pour définir ce moyen M de rigidification, il est envisageable de densifier localement la lanière 20 au niveau de la bordure B1, B2 concernée, par exemple en prévoyant un insert, fait en un matériau plus dense que le matériau formant la lanière 20.

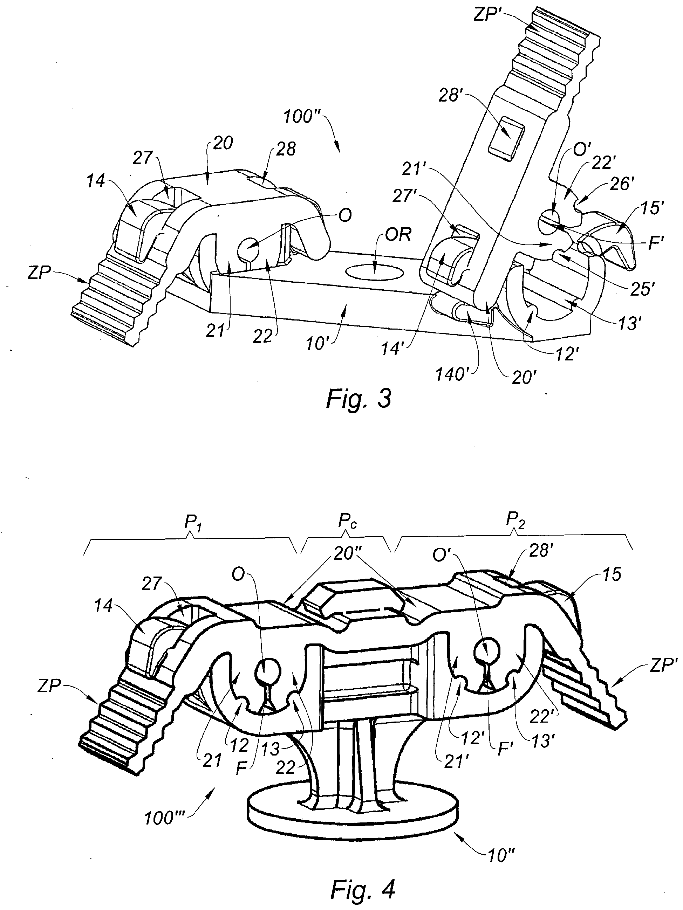

Nous allons décrire un troisième mode de réalisation d'un support de câble conforme à l'invention à l'appui de la figure 3.

Ici, le support 100" comporte au moins une embase 10 qui comprend au moins deux réceptacles 11, 11' et une lanière 20, 20' associée à chaque réceptacle 11, 11'.

Dans le cas illustré ici, le réceptacle 11 et la lanière 20 sont tous deux conformes au réceptacle et à la lanière décrits précédemment à l'appui de la figure 2.

En revanche, l'embase 10', prise dans son ensemble, est modifiée par rapport au premier mode de réalisation, pour recevoir un réceptacle 11' additionnel, lequel est muni d'excroissances 12', 13' conformes aux excroissances 12, 13 du deuxième mode de réalisation et muni de crochets 14', 15' conformes aux crochets 14, 15 du deuxième mode de réalisation.

Par ailleurs, Au réceptacle 11' est associée une lanière 20' conforme à la lanière 20 du deuxième mode de réalisation et comportant donc des lèvres 21', 22' définissant une fente F' et un orifice O', des rainures externes 25', 26' pour coopérer avec les excroissances 12', 13' du réceptacle 11' respectivement, des ouvertures 27', 28' pour les crochets 14', 15' respectivement ainsi qu'une zone de préhension ZP' pour un utilisateur.

Chaque réceptacle 11, 11' est avantageusement installé aux extrémités de l'embase 10'. Un orifice OR est prévue, sur l'embase 10', entre les réceptacles 11, 11' pour y faire passer un moyen d'attache, par exemple un boulonnage ou une vis, permettant la fixation de l'embase 10' sur un support fixe externe au support 100" selon l'invention.

Par ailleurs, on peut installer chaque réceptacle pour faire en sorte que les axe longitudinaux des orifices O et O' soient parallèles. Dans ce cas, on peut installer deux câbles parallèlement.

Enfin, la figure 4 représente un quatrième mode de réalisation d'un support de câble conforme à l'invention.

Dans ce mode de réalisation, le support 100"' comporte au moins une embase 10" muni d'au moins deux réceptacles 11, 11' et une lanière 20" commune pour les deux réceptacles.

Les réceptacles 11, 11' sont conformes aux réceptacles 11, 11' décrits précédemment à l'appui de la figure 3.

La lanière 20" est en revanche commune aux deux réceptacles 11, 11'.

Ainsi, la lanière 20" présente deux paires de lèvres 21, 22 d'une part et 21', 22' d'autre part, chaque paire de lèvres étant destinée à coopérer avec l'un des deux réceptacles 11, 11'. Les lèvres 21, 22 sont identiques à celles qui ont été décrites précédemment à l'appui des figures 1 ou 3. Par ailleurs, les lèvres 21', 22' sont conformes aux lèvres 21, 22.

Plus généralement, on peut présenter la lanière 20" en trois parties. Une première partie P1 et une deuxième partie P2, situées aux extrémités opposées de la lanière 20" et une partie centrale P_{C} qui relie la deuxième partie P2 à la première partie P1. Chaque partie P1, P2 de la lanière 20" est similaire à une lanière 20, telle que décrite par exemple avec la figure 2, mais avec une seule ouverture, à savoir l'ouverture 27 pour la première partie P1 et l'ouverture 28' pour la deuxième partie P2. En effet, du fait que la partie centrale P_{C} relie la deuxième partie P2 à la première partie P1, il n'est pas nécessaire de prévoir plus d'ouvertures.

Il n'en reste pas moins que, dans ce mode de réalisation, comme pour tous les autres, une lanière prévoit une ouvertures par crochet de l'embase, lorsque ce mode d'attache est prévu.

Par ailleurs, toujours du fait de la présence d'une partie centrale PC de la lanière 20", il est avantageux de prévoir une embase 10" munie d'un pied clipsable comme sur la figure 2.

Quel que soit le mode de réalisation envisagé, l'embase est réalisée en un matériau rigide et la lanière est réalisée en un matériau plus souple que celui de l'embase. La rigidité de l'embase permet une tenue sûre du support selon l'invention sur le support fixe (non représenté) sur lequel il est destiné à être monté. La souplesse de la lanière permet sa déformation pour qu'elle puisse s'insérer dans le réceptacle de l'embase et assurer un certain maintien. Cette souplesse permet aussi de protéger (sur le plan mécanique, moins de friction) le câble destiné à être logé dans l'orifice formé entre les lèvres de la lanière. Cette souplesse permet aussi une meilleure protection du câble contre d'éventuelles vibrations, ce qui est notamment d'intérêt pour les applications aéronautiques.

Plus précisément, l'embase 10, 10', 10", rigide, peut être réalisée en un matériau thermoplastique. Ceci est avantageux dans des environnements soumis à des températures élevées car les thermoplastiques sont peu conducteurs de la chaleur.

Ce matériau thermoplastique pour l'embase peut être choisi parmi : polétheretherkétone (PEEK), polyimides (PI), polyétherkétonekétone (PEKK), polyamides (PA), polysulfure de phénylène (PPS), polyphénylsulfone (PPSU), polytétrafluroroéthylène (PTFE), polyfluorure de vinylidène (PVDF), éthylène chlorotrifluoroéthylène (E-CTFE), polyéthylène (PET), polypropylène (PP).

Plus précisément également, la lanière 20, 20', 20" peut être réalisée en élastomère (E) de dureté Shore A comprise entre 40 et 85 ou en thermoplastique élastomère (TPE) de dureté Shore A comprise entre 40 et 85. Le choix de ce type de matériau (élastomère, thermoplastique élastomère) est avantageux dans des environnements soumis à des températures élevées, car ils sont peu conducteurs de la chaleur. Par ailleurs, le choix de la dureté Shore A améliore encore le maintien du câble dans l'orifice formé entre les lèvres, sur un plan statique mais également lorsque le support est soumis à des vibrations liées à son environnement d'installation. Par ailleurs, le choix de cette dureté Shore A améliore aussi le maintien desdites lèvres dans le réceptacle de l'embase lorsque le support est soumis à des vibrations liées à son environnement d'installation.

Lorsqu'un élastomère de dureté Shore A comprise entre 40 et 85 est pris en considération pour la lanière 20, 20', 20", cet élastomère peut être choisi parmi : silicone, butadiène acrylonitrile (NBR), fluoroélastomère, en particulier fluorosilicone, élastomère polyacrylique (ACM), polychloroprène (CR), acrylique, polyéthylène chlorosulfoné, copolymères éthylène-propylène, polyuréthane (PU), élastomère naturel (NR).

Lorsqu'un thermoplastique élastomère (TPE) de dureté Shore A comprise entre 40 et 85 est pris en considération, ce thermoplastique élastomère peut être un thermoplastique polyuréthane (TPU).

En particulier, on peut prévoir, pour des applications exigeantes, notamment à haute température, que le matériau formant ladite au moins une embase 10, 10', 10" soit du polyétherétherkétone (PEEK) et le matériau formant ladite au moins une lanière 20, 20', 20" soit une silicone de dureté Shore A comprise entre 40 et 85, avantageusement entre 50 et 70.

En particulier, pour des applications moins exigeantes, on peut prévoir que le matériau formant ladite au moins une embase 10, 10', 10" soit du polyamide (PA) et le matériau formant ladite au moins une lanière 20, 20', 20" soit du polyuréthane (PU ; élastomère), de dureté Shore A comprise entre 40 et 85.

Quel que soit le mode de réalisation envisagé, on pourra, pour obtenir l'ensemble ESB, avec un support conforme à l'invention mettre en œuvre un procédé de montage d'un câble dans un support 100, 100', 100", 100"' selon l'invention, comportant les étapes suivantes :
a) monter l'embase 10, 10', 10" sur un support fixe, externe audit support selon l'invention;
b) insérer le câble C dans l'orifice O, O' défini entre les lèvres 21, 22, 21', 22' de ladite au moins une lanière 20, 20', 20", par l'intermédiaire de la fente F, F' ;
c) insérer lesdites lèvres 21, 22, 21', 22' de ladite au moins une lanière 20, 20', 20"dans le réceptacle 11, 11' de ladite au moins une embase 10, 10', 10".

Ce procédé de montage est représenté par la figure 5, avec le support 100 du premier mode de réalisation.

Sur la figure 5(a), on observe l'embase 10 montée sur un support fixe SF, externe audit support 100 ; à savoir à l'issue de l'étape a) et avant l'étape b).

Sur la figure 5(b), on observe le support 100, à l'issue de l'étape b) et avant l'étape c).

Sur la figure 5(c), on observe le support 100 à l'issue de l'étape c).

On peut ensuite, comme représenté sur la figure 5(d), fixer la lanière 20 définitivement à l'aide du crochet 15 de l'embase 10.

Par ailleurs, préalablement à l'étape a), on peut prévoir une étape de montage de la lanière 20 sur le crochet 14 de l'embase 10, après que cette dernière a été montée sur le support fixe SF pour aboutir à la configuration de la figure 5(a).

En variante, la configuration de la figure 5(a) peut ne pas être rencontrée. C'est par exemple le cas si l'étape b) est effectuée avant de monter la lanière 20 sur le crochet 14 pour aboutir à la configuration de la figure 5(b). Ceci est compatible avec le procédé décrit précédemment à l'appui des étapes a), b) et c).

En outre, il est tout à fait envisageable d'intervertir l'ordre des étapes.

En effet, le procédé peut être mis dans l'ordre suivant : étape b), puis étape c), puis étape a).

En effet, également, le procédé peut être mis dans l'ordre suivant : étape b), puis étape a) puis étape c).

La seule exigence est que la câble C soit inséré dans l'orifice O des lèvres 21, 22, avant que ces dernières ne soient insérées dans le réceptacle 11 de l'embase 10.

## Revendications

1. Ensemble (ESB) comportant un support (100, 100', 100", 100"') de câble et un câble (C) inséré dans ledit support, ce dernier comprenant :
- au moins une embase (10, 10', 10"), réalisée en un matériau rigide, comportant au moins un réceptacle (11, 11') muni d'un axe longitudinal (AL) et, dont la dimension interne Dᵢₙₜ, prise dans un plan perpendiculaire audit axe longitudinal (AL), est donnée,
- au moins une lanière (20, 20', 20") installée sur l'embase, ladite lanière étant réalisée en un matériau plus souple que celui de l'embase, ladite lanière (20, 20', 20") comportant au moins deux lèvres (21, 22 ; 21', 22') d'une part agencées en vis-à-vis pour définir une fente (F, F') de passage pour un câble entre lesdites lèvres (21, 22 ; 21', 22') et d'autre part conformées pour définir un orifice (O, O'), muni d'un axe longitudinal (AL'), communiquant avec ladite fente (F, F') le long de cet axe longitudinal (AL') de l'orifice (O, O'), lesdites lèvres (21, 22 ; 21', 22') présentant, ensemble, avec le câble (C) inséré dans l'orifice (O, O'), une dimension externe D'ₑₓₜ, prise dans un plan perpendiculaire à l'axe longitudinal (AL') de l'orifice (O, O'), égale ou plus grande que la dimension interne du réceptacle (11, 11'), de sorte que lesdites lèvres (21, 22 ; 21', 22') sont insérées à force dans ledit au moins un réceptacle (11, 11') et lesdites lèvres (21, 22 ; 21', 22') étant orientées en direction du fond du réceptacle (11, 11').

2. Ensemble (ESB) selon la revendication 1, dans lequel au moins l'une au moins des lèvres (21, 22 ; 21', 22') est muni d'un chanfrein (23, 24) entre une surface externe de ladite lèvre (21, 22 ; 21', 22') et la fente (F, F').

3. Ensemble (ESB) selon l'une des revendications précédentes, dans lequel :
- chaque lèvre (21, 22 ; 21', 22') comprend une rainure (25, 26 ; 25', 26') externe s'étendant selon l'axe longitudinal (AL') de l'orifice (O, O') ;
- le réceptacle (11, 11') comprend deux excroissances (12, 13 ; 12', 13') s'étendant selon l'axe longitudinal (AL) du réceptacle (11, 11'),
l'agencement et les dimensions desdites excroissances (12, 13 ; 12', 13') correspondant à l'agencement et aux dimensions des rainures (25, 26 ; 25', 26') de sorte que, lorsque les lèvres (21, 22 ; 21', 22') sont insérées dans le réceptacle, les excroissances (12, 13 ; 12', 13') du réceptacle puissent s'insérer dans les rainures (25, 26 ; 25', 26') desdites lèvres (21, 22 ; 21', 22').

4. Ensemble (ESB) selon l'une des revendications précédentes, dans lequel ladite au moins une lanière (20) est amovible.

5. Ensemble (ESB) selon l'une des revendications précédentes, dans lequel :
- ladite au moins une embase (10, 10', 10") comprend, de part et d'autre du réceptacle (11, 11'), un crochet (14, 15 ; 14', 15') ;
- ladite au moins une lanière (20, 20', 20") comprend, de part et d'autre des lèvres (21, 22 ; 21', 22'), une ouverture (27, 28 ; 27', 28') dont une bordure (B1, B2) est apte à coopérer avec un crochet (14, 15 ; 14', 15') correspondant du réceptacle (11, 11').

6. Ensemble (ESB) selon la revendication précédente, dans lequel l'une au moins desdites bordures (B1, B2) apte à coopérer avec le crochet (14, 15) correspondant du réceptacle (11) comporte un moyen (M) pour rigidifier la lanière (20, 20', 20") au niveau de ladite bordure (B1, B2).

7. Ensemble (ESB) selon l'une des revendications précédentes, dans lequel ladite au moins une lanière (20) comporte au moins une zone de préhension (ZP) pour un utilisateur.

8. Ensemble (ESB) selon l'une des revendications précédentes, dans lequel ladite au moins une embase (10') comprend au moins deux réceptacles (11, 11') et une lanière (20, 20') selon l'une des revendications précédentes associée à chaque réceptacle (11, 11').

9. Ensemble (ESB) selon l'une des revendications 1 à 7, dans lequel ladite au moins une embase (10") comprend au moins deux réceptacles (11, 11') et une lanière (20") commune pour les deux réceptacles, ladite lanière (20") commune présentant deux paires de lèvres (21, 22 ; 21', 22') selon l'une des revendications précédentes, chaque paire de lèvres étant destinée à coopérer avec l'un des deux réceptacles (11, 11').

10. Ensemble (ESB) selon l'une des revendications précédentes, dans lequel le matériau formant ladite au moins une lanière (20, 20', 20") est un élastomère (E) de dureté Shore A comprise entre 40 et 85 ou un thermoplastique élastomère (TPE) de dureté Shore A comprise entre 40 et 85.

11. Ensemble (ESB) selon la revendication précédente, dans lequel ledit élastomère de dureté Shore A comprise entre 40 et 85 est choisi parmi : silicone, butadiène acrylonitrile (NBR), fluoroélastomère, en particulier fluorosilicone, élastomère polyacrylique (ACM), polychloroprène (CR), acrylique, polyéthylène chlorosulfoné, copolymères éthylène-propylène, polyuréthane (PU), élastomère naturel (NR).

12. Ensemble (ESB) selon la revendication 10, dans lequel ledit thermoplastique élastomère de dureté Shore A comprise entre 40 et 85 est un thermoplastique polyuréthane (TPU).

13. Ensemble (ESB) selon l'une des revendications précédentes, dans lequel le matériau formant ladite au moins une embase (10, 10', 10") est un thermoplastique (TP).

14. Ensemble (ESB) selon la revendication précédente, dans lequel ledit matériau thermoplastique de l'embase est choisi parmi : polétheretherkétone (PEEK), polyimides (PI), polyétherkétonekétone (PEKK), polyamides (PA), polysulfure de phénylène (PPS), polyphénylsulfone (PPSU), polytétrafluroroéthylène (PTFE), polyfluorure de vinylidène (PVDF), éthylène chlorotrifluoroéthylène (E-CTFE), polyéthylène (PET), polypropylène (PP).

15. Ensemble (ESB) selon l'une des revendications précédentes, dans lequel :
- le matériau formant ladite au moins une embase (10, 10', 10") est du polyétherétherkétone (PEEK) ;
- le matériau formant ladite au moins une lanière (20, 20', 20") est une silicone de dureté shore A comprise entre 40 et 85, avantageusement entre 50 et 70.

16. Ensemble (ESB) selon l'une des revendications 1 à 14, dans lequel :
- le matériau formant ladite au moins une embase (10, 10', 10") est du polyamide (PA) ; et
- le matériau formant ladite au moins une lanière (20, 20', 20") est du polyuréthane, de dureté shore A comprise entre 40 et 85.

## Patentansprüche

1. Anordnung (ESB), die eine Kabelhalterung (100, 100', 100", 100"') und ein Kabel (C) umfasst, das in die Halterung eingefügt ist, wobei letztere umfasst:
- mindestens einen Sockel (10, 10', 10"), der aus einem starren Material hergestellt ist, der mindestens eine Fassung (11, 11') umfasst, die mit einer Längsachse (AL) versehen ist und deren Innenabmessung Dᵢₙₜ, in einer zur Längsachse (AL) senkrechten Ebene gemessen, gegeben ist,
- mindestens einen Riemen (20, 20', 20"), der am Sockel angebracht ist, wobei der Riemen aus einem Material hergestellt ist, das weicher ist als das des Sockels, wobei der Riemen (20, 20', 20") mindestens zwei Lippen (21, 22; 21', 22') umfasst, die einerseits gegenüberliegend angeordnet sind, um zwischen den Lippen (21, 22; 21', 22') einen Durchgangsschlitz (F, F') für ein Kabel zu definieren, und andererseits so ausgestaltet sind, dass sie eine Bohrung (O, O') definieren, die mit einer Längsachse (AL') versehen ist, die entlang dieser Längsachse (AL') der Bohrung (O, O') mit dem Schlitz (F, F') kommuniziert, wobei die Lippen (21, 22; 21', 22') zusammen mit dem in die Bohrung (O, O') eingefügten Kabel (C) eine Außenabmessung D'ₑₓₜ, in einer zur Längsachse (AL') der Bohrung (O, O') senkrechten Ebene gemessen, aufweisen, die gleich oder größer als die Innenabmessung der Fassung (11, 11') ist, sodass die Lippen (21, 22; 21', 22') mit Kraft in die mindestens eine Fassung (11, 11') eingefügt werden und die Lippen (21, 22; 21', 22') in Richtung des Bodens der Fassung (11, 11') ausgerichtet sind.

2. Anordnung (ESB) nach Anspruch 1, wobei mindestens eine der Lippen (21, 22; 21', 22') zwischen einer Außenfläche der Lippe (21, 22; 21', 22') und dem Schlitz (F, F') mit einer Fase (23, 24) versehen ist.

3. Anordnung (ESB) nach einem der vorstehenden Ansprüche, wobei:
- jede Lippe (21, 22; 21', 22') eine äußere Nut (25, 26; 25', 26') umfasst, die sich entlang der Längsachse (AL') der Bohrung (O, O') erstreckt;
- die Fassung (11, 11') zwei Auswölbungen (12, 13; 12', 13') umfasst, die sich entlang der Längsachse (AL) der Fassung (11, 11') erstrecken, wobei die Anordnung und die Abmessungen der Auswölbungen (12, 13; 12', 13') der Anordnung und den Abmessungen der Nuten (25, 26; 25', 26') entsprechen, sodass, wenn die Lippen (21, 22; 21', 22') in die Fassung eingefügt werden, die Auswölbungen (12, 13; 12', 13') der Fassung sich in die Nuten (25, 26; 25', 26') der Lippen (21, 22; 21', 22') einfügen können.

4. Anordnung (ESB) nach einem der vorstehenden Ansprüche, wobei der mindestens eine Riemen (20) abnehmbar ist.

5. Anordnung (ESB) nach einem der vorstehenden Ansprüche, wobei:
- der mindestens eine Sockel (10, 10', 10") beiderseits der Fassung (11, 11') einen Haken (14, 15; 14', 15') umfasst;
- der mindestens eine Riemen (20, 20', 20") beiderseits der Lippen (21, 22; 21', 22') eine Öffnung (27, 28; 27', 28') umfasst, von der eine Kante (B1, B2) mit einem entsprechenden Haken (14, 15; 14', 15') der Fassung (11, 11') zusammenwirken kann.

6. Anordnung (ESB) nach dem vorstehenden Anspruch, wobei mindestens eine der Kanten (B1, B2), die mit dem entsprechenden Haken (14, 15) der Fassung (11) zusammenwirken kann, ein Mittel (M) umfasst, um den Riemen (20, 20', 20") im Bereich der Kante (B1, B2) zu versteifen.

7. Anordnung (ESB) nach einem der vorstehenden Ansprüche, wobei der mindestens eine Riemen (20) mindestens eine Griffzone (ZP) für einen Benutzer umfasst.

8. Anordnung (ESB) nach einem der vorstehenden Ansprüche, wobei der mindestens eine Sockel (10') mindestens zwei Fassungen (11, 11') und einen Riemen (20, 20') nach einem der vorstehenden Ansprüche umfasst, der jeder Fassung (11, 11') zugeordnet ist.

9. Anordnung (ESB) nach einem der Ansprüche 1 bis 7, wobei der mindestens eine Sockel (10") mindestens zwei Fassungen (11, 11') und einen gemeinsamen Riemen (20") für die zwei Fassungen umfasst, wobei der gemeinsame Riemen (20") zwei Lippenpaare (21, 22; 21', 22') nach einem der vorstehenden Ansprüche aufweist, wobei jedes Lippenpaar dazu bestimmt ist, mit einer der zwei Fassungen (11, 11') zusammenzuwirken.

10. Anordnung (ESB) nach einem der vorstehenden Ansprüche, wobei das Material, das den mindestens einen Riemen (20, 20', 20") bildet, ein Elastomer (E) mit einer Shore-A-Härte im Bereich zwischen 40 und 85, oder ein thermoplastisches Elastomer (TPE) mit einer Shore-A-Härte im Bereich zwischen 40 und 85 ist.

11. Anordnung (ESB) nach dem vorstehenden Anspruch, wobei das Elastomer mit einer Shore-A-Härte im Bereich zwischen 40 und 85 ausgewählt ist aus: Silikon, Butadien-Acrylnitril (NBR), Fluorelastomer, insbesondere Fluorsilikon, Polyacrylat-Elastomer (ACM), Polychloropren (CR), Acryl, chlorsulfoniertem Polyethylen, Ethylen-Propylen-Copolymeren, Polyurethan (PU), natürlichem Elastomer (NR).

12. Anordnung (ESB) nach Anspruch 10, wobei das thermoplastische Elastomer mit einer Shore-A-Härte im Bereich zwischen 40 und 85 ein thermoplastisches Polyurethan (TPU) ist.

13. Anordnung (ESB) nach einem der vorstehenden Ansprüche, wobei das Material, das den mindestens einen Sockel (10, 10', 10") bildet, ein Thermoplast (TP) ist.

14. Anordnung (ESB) nach dem vorstehenden Anspruch, wobei das thermoplastische Material des Sockels ausgewählt ist aus: Polyetheretherketon (PEEK), Polyimiden (PI), Polyetherketonketon (PEKK), Polyamiden (PA), Polyphenylensulfid (PPS), Polyphenylsulfon (PPSU), Polytetrafluorethylen (PTFE), Polyvinylidenfluorid (PVDF), Ethylen-Chlortrifluorethylen (E-CTFE), Polyethylen (PET), Polypropylen (PP).

15. Anordnung (ESB) nach einem der vorstehenden Ansprüche, wobei:
- das Material, das den mindestens einen Sockel (10, 10', 10") bildet, Polyetheretherketon (PEEK) ist;
- das Material, das den mindestens einen Riemen (20, 20', 20") bildet, ein Silikon mit einer Shore-A-Härte im Bereich zwischen 40 und 85, vorteilhafterweise zwischen 50 und 70, ist.

16. Anordnung (ESB) nach einem der Ansprüche 1 bis 14, wobei:
- das Material, das den mindestens einen Sockel (10, 10', 10") bildet, Polyamid (PA) ist; und
- das Material, das den mindestens einen Riemen (20, 20', 20") bildet, Polyurethan mit einer Shore-A-Härte im Bereich zwischen 40 und 85 ist.

## Claims

1. Assembly (ESB) comprising a cable support (100, 100', 100", 100‴) and cable (C) inserted in said support, the latter comprising:
- at least one base (10, 10', 10"), made of a rigid material, comprising at least one receptacle (11, 11') provided with a longitudinal axis (AL) and, of which the inner dimension Dᵢₙₜ, taken in a plane perpendicular to said longitudinal axis (AL), is given,
- at least one strap (20, 20', 20") mounted on the base, said strap been made of a more flexible material than that of the base, said strap (20, 20', 20") comprising at least two lips (21, 22; 21', 22') on the one hand arranged opposite one another to define a slot (F, F') for the passage of a cable between said lips (21, 22; 21', 22') and on the other hand, shaped to define an orifice (O, O'), provided with a longitudinal axis (AL'), communicating with said slot (F, F') along this longitudinal axis (AL') of the orifice (O, O'), said lips (21, 22; 21', 22') together having, with the cable (C) inserted in the orifice (O, O'), an outer dimension D'ₑₓₜ taken in a plane perpendicular to the longitudinal axis (AL') of the orifice (O, O'), equal to or greater than the inner dimension of the receptacle (11, 11'), so that said lips (21, 22, 21', 22') are inserted by force into said at least receptacle (11, 11') and said lips (21, 22, 21', 22') being oriented towards the bottom of the receptacle (11, 11').

2. Assembly (ESB) according to claim 1, wherein at least one of the lips (21, 22; 21', 22') is provided with a bevel (23, 24) between an outer surface of said lip (21, 22; 21', 22') and the slot (F, F').

3. Assembly (ESB) according to one of the preceding claims, wherein:
- each lip (21, 22; 21', 22') comprises an outer groove (25, 26; 25', 26') extending along the longitudinal axis (AL') of the orifice (O, O');
- the receptacle (11, 11') comprises two protrusions (12, 13; 12', 13') extending along the longitudinal axis (AL) of the receptacle (11, 11'),
the arrangement and the dimensions of said protrusions (12, 13; 12', 13') corresponding to the arrangement and to the dimensions of the grooves (25, 26; 25', 26') such that, when the lips (21, 22; 21', 22') are inserted in the receptacle, the protrusions (12, 13; 12', 13') of the receptacle can be inserted in the grooves (25, 26; 25', 26') of said lips (21, 22; 21', 22').

4. Assembly (ESB) according to one of the preceding claims, wherein said at least one strap (20) is removable.

5. Assembly (ESB) according to one of the preceding claims, wherein:
- said at least one base (10, 10', 10") comprises, on either side of the receptacle (11, 11'), a hook (14, 15; 14', 15');
- said at least one strap (20, 20', 20") comprises, on either side of the lips (21, 22; 21', 22'), an opening (27, 28; 27', 28') of which an edge (B1, B2) is capable of engaging with a corresponding hook (14, 15; 14', 15') of the receptacle (11, 11').

6. Assembly (ESB) according to the preceding claim, wherein at least one of said edges (B1, B2) capable of engaging with the corresponding hook (14, 15) of the receptacle (11) comprises a means (M) for stiffening the strap (20, 20', 20") at said edge (B1, B2).

7. Assembly (ESB) according to one of the preceding claims, wherein said at least one strap (20) comprises at least one gripping zone (ZP) for a user.

8. Assembly (ESB) according to one of the preceding claims, wherein said at least one base (10') comprises at least two receptacles (11, 11') and a strap (20, 20') according to one of the preceding claims associated with each receptacle (11, 11').

9. Assembly (ESB) according to one of claims 1 to 7, wherein said at least one base (10") comprises at least two receptacles (11, 11') and a common strap (20") for the two receptacles, said common strap (20") having two pairs of lips (21, 22, 21', 22') according to one of the preceding claims, each pair of lips being intended to engage with one of the two receptacles (11, 11').

10. Assembly (ESB) according to one of the preceding claims, wherein the material forming said at least one strap (20, 20', 20") is an elastomer (E) of Shore A hardness comprised between 40 and 85 or a thermoplastic elastomer (TPE) of Shore A hardness comprised between 40 and 85.

11. Assembly (ESB) according to the preceding claim, wherein said elastomer of Shore A hardness comprised between 40 and 85 is selected from among: silicone, butadiene acrylonitrile (NBR), fluoroelastomer, in particular fluorosilicone, polyacrylic elastomer (ACM), polychloroprene (CR), acrylic, chlorosulfonated polyethylene, ethylene-propylene copolymers, polyurethane (PU), natural elastomer (NR).

12. Assembly (ESB) according to claim 10, wherein said thermoplastic elastomer of Shore A hardness comprised between 40 and 85 is a thermoplastic polyurethane (TPU).

13. Assembly (ESB) according to one of the preceding claims, wherein the material forming said at least one base (10, 10', 10") is a thermoplastic (TP).

14. Assembly (ESB) according to the preceding claim, wherein said thermoplastic material of the base is selected from among: polyetheretherketone (PEEK), polyimides (PI), polyetherketoneketone (PEKK), polyamides (PA), phenylene polysulphide (PPS), polyphenylsulfone (PPSU), polytetrafluroroethylene (PTFE), polyvinylidene fluoride (PVDF), chlorotrifluoroethylene ethylene (E-CTFE), polyethylene (PET), polypropylene (PP).

15. Assembly (ESB) according to one of the preceding claims, wherein:
- the material forming said at least one base (10, 10', 10") is polyetheretherketone (PEEK);
- the material forming said at least one strap (20, 20', 20") is a silicone of Shore A hardness comprised between 40 and 85, advantageously between 50 and 70.

16. Assembly (ESB) according to one of claims 1 to 14, wherein:
- the material forming said at least one base (10, 10', 10") is polyamide (PA); and
- the material forming said at least one strap (20, 20', 20") is polyurethane, of Shore A hardness comprised between 40 and 85.
